# EUROPEAN PATENT APPLICATION

(11) **EP 0 928 587 A1**
(43) Date of publication of application: **14.07.1999**
(21) Application number: 99300143.7
(22) Date of filing: 08.01.1999
(51) Int. Cl.: A47J 27/00, A47J 27/022

(54) **Cookware with steel capped base and method of and apparatus for forming the same**

(30) Priority: 09.01.1998 GB 9800516
(71) Applicant: MEYER MANUFACTURING CO., LTD, Hong Kong (HK)
(72) Inventor: Cheng, Stanley Kin-sui, Kwun Tong, Kowloon (HK)
(74) Representative: Findlay, Alice Rosemary

(57) **Abstract**

An article of cookware comprises a body (2) having a base region that is at least partly formed of aluminium or aluminium alloy having a steel cap (4) secured thereto by an impact bonding process through an intermediate aluminium or aluminium alloy plate (6), the process including the steps of (a) arranging an aluminium plate between the base of the article and the steel cap; (b) heating the base of the article, aluminium plate and steel cap to a temperature such that the aluminium has softened: (c) arranging the article with aluminium plate and steel cap in a press and whilst the temperature of the aluminium plate is such that the aluminium remains soft, impacting the steel cap against the base of the article and deforming the aluminium plate thereby forming a bond therebetween.

## Description

The present invention relates to an article of cookware which has a steel cap applied to the base, and to a method of applying such a steel cap, as well as to an apparatus for carrying out this method.

Items of cookware which are formed of aluminium bodies commonly have a porcelain enamel, silicon-polyester or other type of paint surface applied to the exterior. Although attractive in appearance, these finishes are susceptible to cracking or scratching, or in the case of porcelain enamels, to chipping, especially at the region of the base. In particular, the movement of a cooking pan back and forth across the cooking stove's cooking element or support can permanently damage the surface of the pan.

It is known to apply a non-stick coating to the inside cooking surface of the pan, including the inner side wall, and also to extend this onto the outer side wall. A non-stick coating however cannot be applied to the base of the pan and in the case of aluminium pans, the aluminium is often left exposed on the base. Since aluminium is soft and relatively porous it stains easily and can become permanently discoloured in a relatively short period of time.

It is known to apply a steel cap to a steel pan by an impact bonding process. However, due to the different heat conduction properties of aluminium or aluminium alloys from steel, proper bonding of a steel cap to an aluminium base is very difficult. Major problems result from any separation between the stainless steel cap and the base or side wall of the pan. Any such opening can accumulate water during washing, which during the next cooking cycle, will boil and spit out of the opening thereby creating a safety hazard.

The present invention seeks to provide a method of applying a stainless steel cap to an article of aluminium cookware or an article comprising at least partly aluminium in its base, to provide an apparatus for forming such an article, and to provide an article of cookware having such a steel cap.

According to one aspect of the present invention there is provided an article of cookware comprising a body having a base region that is at least partly formed of aluminium or aluminium alloy having a steel cap secured thereto by an impact bonding process through an intermediate aluminium or aluminium alloy plate.

The steel cap may include an upwardly extending peripheral region which extends around at least the portion of the base corner radius of the article. The peripheral region may even be extended so that this reaches onto the side wall of the article.

The article of cookware may be formed solely of aluminium or aluminium alloy, but may also be in the form of a laminate comprising aluminium clad with steel, where the steel cladding forms the interior of the article. Alternatively, the article may be formed of a laminate comprising a steel layer, an internal core of aluminium, and a further layer of steel.

In a further aspect, the invention resides in a process for providing an article of cookware having a base region at least partly formed of aluminium or aluminium alloy with a steel cap, the process comprising the steps of:-
(a) arranging an aluminium plate between the base of the article and the steel cap;
(b) heating the base of the article, aluminium plate and steel cap to a temperature such that the aluminium has softened;
(c) arranging the article with aluminium plate and steel cap in a press and whilst the temperature of the aluminium plate is such that the aluminium remains soft, impacting the steel cap against the base of the article and deforming the aluminium plate thereby forming a bond therebetween.

The article, plate and steel cap are preferably heated to a temperature in the range of 400-450°C.

Control of the temperature of heating is important since if the temperature is too high, the aluminium article can become too soft and can in the worst case stick to the die parts in the press. If the temperature is too low the bond is inadequate.

Whilst the precise desired temperature of heating will vary with the precise materials and dimensions of the article, thickness of the aluminium plate and other external factors it is found that a temperature of about 420°C is in many cases particularly effectively.

The aluminium plate is preferably of a thickness such that there is a separation between the periphery of the steel cap and the base of the article prior to bonding, and such that during the impact bonding the plate is deformed so that the periphery of the plate tightly abuts the article on bonding.

Preferably, prior to the heating step (b) the aluminium plate and steel cap are welded to the article to ensure correct alignment during subsequent processing.

The heating process is preferably carried out in an induction heater which includes a first body which extends into the interior of the cookware article, and a second body which abuts the surface of the steel cap. The first body may include layers of insulative material to reduce the heating effect relative to that of the second body. As an alternative to induction heating, a furnace or other heating arrangement may be used.

The press preferably includes dies in which it is arranged that cooling fluid circulates, or alternatively or additionally, a cooling fluid is directed at the dies after each impact bonding process, in order to ensure that the temperature of the dies does not rise substantially above 450°C.

In a further aspect the invention resides in an article of cookware produced by the above-mentioned process.

In a still further aspect the invention resides in an apparatus for providing an article of cookware comprising a body having a base region that is partly formed of aluminium or aluminium alloy with a steel cap secured thereto by an impact bonding process, the apparatus including a press having a first die part dimensioned to fit within the cookware article so as to extend up to the inner cooking surface thereof, and a second die part for impacting the steel cap, and cooling means employing a cooling fluid which contacts one or both of the said die parts.

In one embodiment, one or both of the dies parts are formed internally, externally or both, with coils through which a cooling fluid is in use circulated. As an alternative, or additionally thereto it may be arranged that a cooling fluid is directed externally onto the die parts after each impact bonding procedure.

The apparatus may also include a welding station at which the steel cap and aluminium are welded to the base of the article of cookware, and a heating station at which at least the base of the cookware article and the steel plate are heated prior to impact bonding.

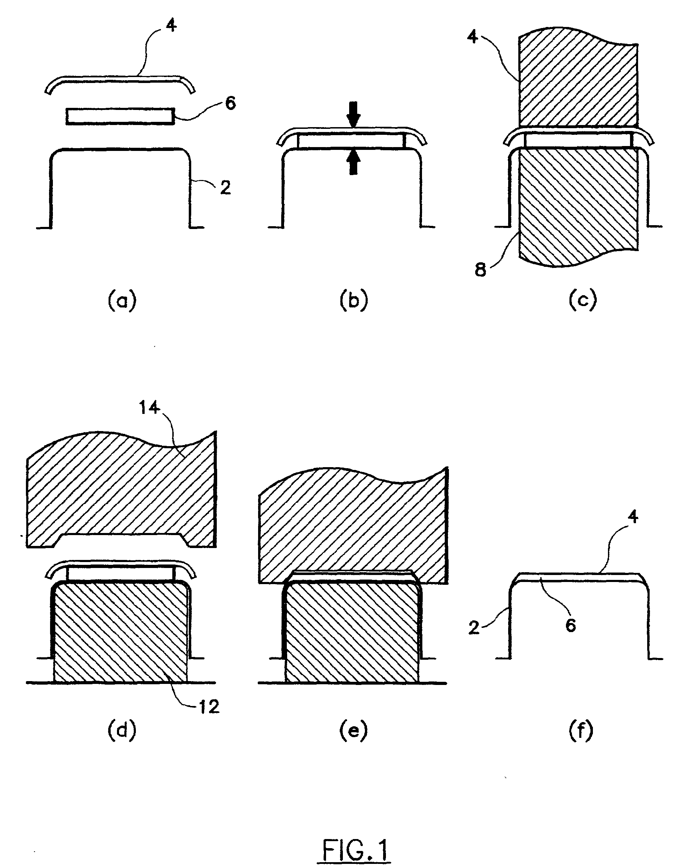

Embodiments of the invention are now described, by way of example only, with reference to the following drawings in which:-
Figure 1(a) illustrates an article of cookware, aluminium plate and steel cap prior to bonding;
Figure 1(b) illustrates a welding step for securing the steel cap;
Figure 1(c) illustrates the step of induction heating;
Figure 1(d) & (e) illustrates the impact bonding: and
Figure 1(f) shows the article with a steel cap applied.

Turning to the Figures, Figure 1(a) shows an article of cookware, in this case a saucepan 2 in an upturned orientation in which a steel cap 4 which is to be applied thereto. An intermediate aluminium disc or plate 6 is disposed between the steel cap 4 and pan 2.

The pan 2 may be formed solely of aluminium or alloys of aluminium. The pan may also be a laminated pan comprising aluminium to which stainless steel cladding has been applied. Such pans are generally made by cladding a stainless steel disc onto an aluminium disc and then stamping the pan shape with the aluminium layer becoming the exterior, and the stainless steel the interior. The pan may further be a laminated pan comprising a pair of laminated stainless steel layers with an aluminium core therebetween, at least in the region which constitutes the base of the article of cookware. The cap 4 is preferably formed of stainless steel.

As indicated in Figure 1(b) the aluminium disc 6 is placed between the base of the pan 2 and stainless steel cap 4, and the disc 6 and cap 4 welded into place, preferably at a region near the centre thereof. This provides a relatively weak bond which ensures accurate positioning of the components is maintained for the subsequent processing steps.

The pan with welded disc 6 and cap 4 is introduced into an induction heater. Such machines generally have a number of heating heads rotating on a turntable for receiving a number of articles. Each head has a lower fixture indicated 8 which holds the pan and which extends into the interior of the pan, and an upper fixture 10 having a flat lower surface which is moved into contact with the surface of the cap 4. In the induction heater the temperature at the regions of the pan and steel cap in contact with the lower and upper fixtures is raised to a temperature within the range of 400-450°C, preferably about 420°C. The lower fixture 8 can include layers of heat-insulating material between this and the inner surface of the pan in order to maintain a slightly lower temperature of the pan. Accurate control of the temperature within the pan is important to the bonding process, as discussed in further detail below.

As an alternative to using an induction heater, it is possible to use other heating means such as a furnace or similar, although an induction heater is found to allow accurate control of heating.

Following the heating the pan is quickly transferred to the impact bonding screw press as indicated in Figure 1(d). In an automated process line there may be only a few seconds between heating and impact bonding. The press includes a lower die plug 12 and upper die 14. In the press the upper die part impacts the steel cap 4 with a force in the region of 1,500 to 2,500 metric tonnes, This has the effect of deforming the relatively soft aluminium disc 6, which decreases in thickness and increases in area laterally whilst forming a mechanical bond with the base of the pan 2 and with the inner surface of the steel cap 4. In practice, the precise force required is determined by various factors including the bonding surface area, the thickness of the aluminium disc, the precise temperature utilized, so as to ensure a firm bond, and one in which the periphery of the stainless steel disc is tightly up against the base of the pan 2. The volume and height of the aluminium plate is carefully controlled to ensure that it just fills the region between the interior of the steel cap 4 and base of the pan, but does not exceed this and squeeze out from under the cap.

It is found that allowing control of the temperature of the dies 12 and 14 is critical in ensuring quality of bonding. In order to achieve good bonding, the pan, the aluminium plate 6 and stainless steel cap 4 have to be heated up to about 400-450°C. This temperature must be substantially maintained during bonding. A relatively small increase in temperature will make the pan too soft, so that this will stick to the dies during the impact bonding process, whilst if the temperature is too low the quality of the bond will be poor. Although the die parts 12 and 14 are not directly heated, in an automated process the press may receive 7 to 10 pans a minute, and the die parts thereby receive heat from each pan which is introduced, Moreover, the high pressures involved create heat. In order to allow accurate temperature control, one or both of the dies parts 12 and 14 is provided with cooling coils through which a cooling fluid, preferably water, io circulated. These may be arranged on the outside of the dies or internally, or both. In addition, or instead a cooling water spray may be directed through a nozzle onto the die parts 12 and 14 subsequent to each impact bond and removal of the pan from the press. Appropriate control of the input temperature arid flow rate of cooling fluid, and/or control of the flow rate of the water spray allows the temperature of the dies parts 12 and 14 to be appropriately maintained so that the aluminium is not over-softened, and avoiding the risk of the aluminium adhering to the die parts.

In the case of a pan formed of aluminium clad with steel or a steel/aluminium/steel laminate, the correct maintenance of temperature is also important for ensuring that delamination does not occur.

Adding a stainless steel cap to the bottom of the pan eliminates the problem of cracking or scratching of paint or chipping of enamel on the base. Burnt on food can be removed with scouring pans without permanently marring the stainless steel base, and scratches are far less noticeable. By providing a stainless steel cap 4 which has an upwardly bent periphery a cap can be provided with extends part of the way up the corner radius of the pan, or even onto the pan side wall if desired.

## Claims

1. An article of cookware comprising a body having a base region that is at least partly formed of aluminium or aluminium alloy having a steel cap secured thereto by an impact bonding process through an intermediate aluminium or aluminium alloy plate.

2. An article of cookware according to claim 1 wherein the steel cap includes an upwardly extending peripheral region which extends around at least the portion of the base corner radius of the article.

3. An article of cookware according to claim 2 wherein the peripheral region extends onto the side wall of the article.

4. An article of cookware according to any preceding claim wherein the body is formed solely of aluminium or aluminium alloy.

5. An article of cookware according to any one of claims 1 to 3 wherein the body is in the form of a laminate comprising aluminium clad with steel, the steel cladding forming the interior of the article.

6. An article of cookware according to any one of claims 1 to 3 wherein the body is in the form of a laminate comprising a steel layer, an internal core of aluminium, and a further layer of steel.

7. A process for providing an article of cookware having a base region at least partly formed of aluminium or aluminium alloy with a steel cap, the process comprising the steps of:-
(a) arranging an aluminium plate between the base of the article and the steel cap;
(b) heating the base of the article, aluminium plate and steel cap to a temperature such that the aluminium has softened;
(c) arranging the article with aluminium plate and steel cap in a press and whilst the temperature of the aluminium plate is such that the aluminium remains soft, impacting the steel cap against the base of the article and deforming the aluminium plate thereby forming a bond therebetween.

8. A process according to claim 7 wherein the article, plate and steel cap are heated to a temperature in the range of 400-450°C.

9. A process according to claim 8 wherein the article, plate and steel cap are heated to a temperature of about 420°C.

10. A process according to any of claims 7 to 9 wherein the aluminium plate is of a thickness such that there is a separation between the periphery of the steel cap and the base of the article prior to bonding, and such that during the impact bonding the plate is deformed so that the periphery of the plate tightly abuts the article on bonding.

11. A process according to any one of claims 7 to 10 wherein prior to the heating step (b) the aluminium plate and steel cap are welded to the article to ensure correct alignment during subsequent processing.

12. A process according to any one of claims 7 to 11 wherein the heating process is preferably carried out in an induction heater which includes a first body which extends into the interior of the cookware article, and a second body which abuts the surface of the steel cap.

13. A process according to any one of claims 7 to 12 wherein the first body includes layers of insulative material to reduce the heating effect relative to that of the second body.

14. A process according to any one of claims 7 to 13 wherein the press includes dies in which it is arranged that cooling fluid circulates, in order to ensure that the temperature of the dies does not rise substantially above 450°C.

15. An article of cookware produced by the process of any one of claims 7 to 14.

16. An apparatus for providing an article of cookware comprising a body having a base region that is partly formed of aluminium or aluminium alloy with a steel cap secured thereto by an impact bonding process, the apparatus including a press having a first die part dimensioned to fit within the cookware article so as to extend up to the inner cooking surface thereof, and a second die part for impacting the steel cap, and cooling means employing a cooling fluid which contacts one or both of the said die parts.

17. An apparatus according to claim 15 wherein at least one of the die parts are formed internally, externally or both, with coils through which a cooling fluid is in use circulated.

18. An apparatus according to claim 15 or 16 further comprising a welding station at which the steel cap and aluminium plate are welded to the base of the article of cookware, and a heating station at which at least the base of the cookware article and the steel cap and aluminium plate are heated prior to impact bonding.
